# EUROPEAN PATENT APPLICATION

(11) **EP 4 317 271 A1**
(43) Date of publication of application: **07.02.2024**
(21) Application number: 22804877.3
(22) Date of filing: 04.05.2022
(51) Int. Cl.: C08J 5/18, C08K 3/36, B29C 55/12, H01M 50/446, H01M 50/403

(54) **BIAXIALLY ORIENTED POLYESTER FILM AND SECONDARY BATTERY SEPARATOR COMPRISING SAME**

(30) Priority: 18.05.2021 KR 20210063950
(71) Applicant: Toray Advanced Materials Korea Inc., Gumi-si, Gyeongsangbuk-do 39389 (KR)
(72) Inventor: HONG, Min Gi, Gumi-si Gyeongsangbuk-do 39389 (KR); KIM, Young Ho, Gumi-si Gyeongsangbuk-do 39389 (KR)
(74) Representative: Groth & Co. KB
(86) International application number: PCT/KR2022/006449
(87) International publication number: WO 2022/245022

(57) **Abstract**

A biaxially oriented polyester film according to the present invention is a biaxially oriented polyester film comprising inorganic particles and a polyester resin, wherein the hardness of a roll obtained by slitting a master roll on which the biaxially oriented polyester film is wound and then by being rewound thereon at a winding tension of 6.5 kg/m to 8.5 kg/m, a winding surface pressure of 35 kg/m to 50 kg/m and a winding rate of 300 m/min to 350 m/min, is 90 to 95 points. The biaxially oriented polyester film prevents the roll from forming wrinkles over time in a roll wound state, and therefore when used as an interlayer of a secondary battery separator, can prevent wrinkles from transferring onto the separator.

## Description

### Technical Field

The present invention relates to a biaxially oriented polyester film, and more specifically, to a biaxially oriented polyester film which, when used as an interlayer of a secondary battery separator, can prevent time-induced wrinkles from transferring onto the secondary battery separator by reconfiguring surface characteristics and optimizing winding conditions, and a secondary battery separator including the same.

### Background Art

Recently, as part of environmental and carbon reduction policies, there has been a shift from internal combustion engine vehicles using gasoline or diesel to electric cars. Consequently, the demand for electric vehicles is gradually increasing, and their adoption rate is rising. With the increasing adoption of electric vehicles, there has been a sharp rise in the demand for the secondary batteries that are essential for electric vehicles, leading to rapid growth in the secondary battery market.

These secondary batteries are batteries composed of one or more electrochemical cells that can be charged and discharged, allowing for multiple uses through recharging, making them convenient and environmentally friendly as they generate no battery waste. Typically, a secondary battery consists of an anode and a cathode that determine the battery's capacity and voltage and allow current to flow, an electrolyte solution that facilitates the smooth movement of ions, and a separator that prevents contact between the anode and cathode.

In addition, as part of the manufacturing process of secondary batteries, a safety reinforced separator (SRS) coating is applied to enhance the safety of the separator (PE material, flexible) used in the secondary battery. During the rewinding process after coating, there is an issue where the separators stick together. To prevent this, a polyester film is inserted as an interlayer between the separators and laminated to them to prevent the separators from sticking together during rewinding.

However, if the polyester film used as an interlayer has severe wrinkles, these wrinkles may transfer onto the flexible material of the separator, leading to deterioration in the quality of the separator. In particular, conventional polyester films have no wrinkles in their rolled state shortly after production, but due to poor durability over time, the air inside the film is not sufficiently released. This leads to trapped air inside the film, causing wrinkles. These wrinkles in the polyester film transfer to the separator, significantly affecting the quality of the separator.

Therefore, there is an urgent need to address the issue of wrinkles developing over time in polyester films used as interlayers for secondary battery separators to prevent their transfer onto the separator.
(Patent Literature 1) Korean Patent Publication No. 10-2018-0077585

### Detailed Description of the Invention

### Technical problem

The present invention is devised to solve the aforementioned problems. An object of the present invention is to provide a biaxially oriented polyester film that can prevent a roll from forming wrinkles over time in a wound state after production of a polyester film, and a secondary battery separator including the same.

The above and other objects and advantages of the present invention will become apparent from the following description of preferred embodiments.

### Technical Solution

The above object is achieved by a biaxially oriented polyester film comprising inorganic particles and a polyester resin, wherein the hardness of a roll obtained by slitting a master roll on which the biaxially oriented polyester film is wound and then by being rewound thereon at a winding tension of 6.5 kg/m to 8.5 kg/m, a winding surface pressure of 35 kg/m to 50 kg/m and a winding rate of 300 m/min to 350 m/min, is 90 to 95 points.

Preferably, an average particle size of the inorganic particles may be in a range of 3.0 *µ*m to 5.0 *µ*m.

Preferably, the inorganic particles may be included in an amount of 0.0008 to 0.0015 wt %.

Preferably, the biaxially oriented polyester film may have a center line average roughness (SRa) of 40 nm to 80 nm and a 10-point mean roughness (SRz) of 800 nm to 1300 nm.

Preferably, the biaxially oriented polyester film may have a maximum roughness (SRmax) of 1100 nm to 1800 nm.

Preferably, the biaxially oriented polyester film may have a haze of 4% or more.

Preferably, the biaxially oriented polyester film may have a surface peak count (SPC) of 100 or more projections with a height of 0.15 *µ*m or more within an area of 0. 1 mm².

Preferably, the inorganic particles may be silica particles.

Preferably, a thickness of the biaxially oriented polyester film may be in a range of 10 *µ*m to 16 *µ*m.

In addition, the above object is achieved by a biaxially oriented polyester film which is used as an interlayer of a secondary battery separator.

Furthermore, the above object is achieved by a secondary battery separator including the above-described biaxially oriented polyester film and a secondary battery including the same.

### Advantageous Effects

According to an embodiment of the present invention, a biaxially oriented polyester film is redesigned in terms of surface characteristics and optimizes winding conditions to allow the air inside the wound film roll to escape smoothly. As a result, it offers advantages such as the absence of wrinkles over time immediately after film production and the prevention of wrinkles caused by internal air during winding.

In addition, according to the present invention, since the polyester film does not form wrinkles over time, when it is used as an interlayer of a secondary battery separator, wrinkles do not transfer to the separator. This prevents quality issues due to wrinkles during separator lamination processing, enhancing the quality of a secondary battery separator, and enabling the stable supply of products.

Moreover, according to the present invention, as wrinkles do not transfer to the separator when the polyester film is used as an interlayer of a secondary battery separator, a high-efficiency secondary battery that includes a high-efficiency secondary battery separator may be provided.

However, the effects of the present invention are not limited to the effects mentioned above, and other effects not mentioned will be clearly understood by those skilled in the art from the description below.

### Brief Description of Drawings

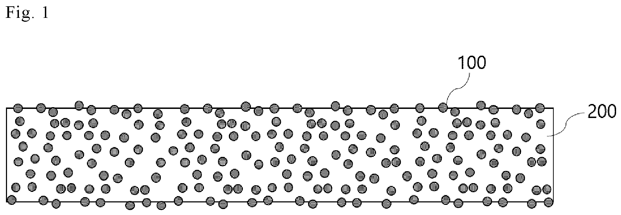

FIG. 1 is a schematic cross-sectional view of a biaxially oriented polyester film according to an embodiment of the present invention.

### Mode for Invention

The invention will be described more fully with reference to the accompanying drawings, in which example embodiments of the inventions are shown. This invention may, however, be embodied in many different forms and should not be construed as limited to only the embodiments set forth herein.

In the drawings, the thickness of layers and regions are exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

Unless otherwise defined, all technical and scientific terms used herein have the same meaning as commonly understood by one of ordinary skill in the art to which this invention belongs. In case of conflict, the present specification, including definitions, will control. Although methods and materials similar or equivalent to those described herein can be used in the practice or testing of the invention, suitable methods and materials are described herein.

A biaxially oriented polyester film according to an embodiment of the present invention is provided in which the size of inorganic particles used during film production is adjusted and the roll winding process conditions are modified to reduce the occurrence of wrinkles over time. Hereinafter, the present invention will be described in more detail.

FIG. 1 is a schematic cross-sectional view of a biaxially oriented polyester film according to an embodiment of the present invention.

Referring to FIG. 1, the biaxially oriented polyester film according to an embodiment of the present invention includes inorganic particles 100 and a polyester resin 200, and has a structure in which the inorganic particles 100 are dispersed in the polyester resin 200.

The inorganic particles 100 used in the present invention preferably include silica (SiO₂), borosilicate, aluminosilicate, and alumina, or more preferably, silica particles.

In one embodiment, the average particle size of the inorganic particles 100 is preferably in the range of 3.0 to 5.0 *µ*m. Using inorganic particles 100 with a size less than 3.0 *µ*m may lead to severe wrinkling during winding, and it is difficult for air to escape from a wound roll, resulting in the formation of wrinkles over time. Conversely, if the size of the inorganic particles 100 exceeds 5.0 *µ*m, it may lead to compression between film layers due to larger particles, causing an increase of the pressure rise in a filter within a short period of time during film production, resulting in increased production loss.

In one embodiment, the inorganic particles 100 are preferably contained in an amount of 0.0008 to 0.0015 wt % relative to 100 wt % of the total biaxially oriented polyester film. When the content of inorganic particles 100 is less than 0.0008 wt %, there is an insufficient air layer between film layers, leading to the formation of surface projections on certain parts of the film. As these surface projections accumulate, the projections become severe on the wound roll, causing defects in processing and deteriorating the winding quality, resulting in more wrinkles in the MD direction during winding. On the other hand, when the content of inorganic particles 100 exceeds 0.0015 wt %, defects occur due to increased foreign matter caused by particle agglomeration, and film breakage occurs due to the particles when the film is stretched.

In one embodiment, the polyester resin 100 constituting the biaxially oriented polyester film may be formed by polymerizing dicarboxylic acid and diol and may include polyethylene terephthalate (PET).

Here, examples of the dicarboxylic acid may include aromatic dicarboxylic acids, such as, terephthalic acid, naphthalenedicarboxylic acid, isophthalic acid, diphenyl carboxylic acid, diphenyl sulfone dicarboxylic acid, diphenoxyethane dicarboxylic acid, 5-sodiumsulfone dicarboxylic acid, phthalic acid, etc.; aliphatic dicarboxylic acids, such as, hydroxyl acid, succinic acid, adipic acid, sebacic acid, dimer acid, maleic acid, fumaric acid, etc.; alicyclic dicarboxylic acids, such as, cyclohexane dicarboxylic acid, etc.; and oxycarboxylic acids, such as, paraoxybenzoic acid. Examples of the diol may include aliphatic glycols, such as, ethylene glycol, propanediol, butanediol, pentanediol, hexanediol, neopentyl glycol, etc.; polyoxyalkylene glycols, such as, diethylene glycol, polyethylene glycol, polypropylene glycol, etc.; alicyclic glycols, such as, cyclohexane dimethanol, etc.; and aromatic glycols, such as, bisphenol A, bisphenol S, etc.

In one embodiment, the biaxially oriented polyester film according to one embodiment of the present invention preferably has a center line average roughness (SRa) of 40 to 80 nm. At this time, if the center line average roughness (SRa) is less than 40 nm, there is less space for air to escape between each layer when laminating films, leading to the formation of wrinkles over time. If it exceeds 80 nm, an excessive number of particles are introduced, leading to increased filter pressure during production and reduced productivity.

In one embodiment, the biaxially oriented polyester film preferably has a 10-point mean roughness (SRz) of 800 to 1300 nm. At this time, if the 10-point mean roughness (SRz) is less than 800 nm, there is less space for air to escape between each layer when laminating films, leading to the formation of wrinkles over time. If it exceeds 1300 nm, an excessive number of particles are introduced, leading to increased filter pressure during production and reduced productivity.

In one embodiment, the biaxially oriented polyester film preferably has a maximum roughness (SRmax) of 1100 to 1800 nm. At this time, if the maximum roughness (SRmax) is less than 1100 nm, there is less space for air to escape between each layer when laminating films, leading to the formation of wrinkles over time. If it exceeds 1800 nm, an excessive number of particles are introduced, leading to increased filter pressure during production and reduced productivity.

In one embodiment, the biaxially oriented polyester film preferably has a haze of 4% or more. At this time, when the haze is less than 4%, the particle content is reduced, which makes air release less effective, leading to the formation of wrinkles over time.

In one embodiment, the biaxially oriented polyester film preferably has a surface peak count (SPC) of 100 or more projections with a height of 0.15 ,um or more within an area of 0.1 mm². At this time, when the number of projections is less than 100, there is less space for air to escape between each layer when laminating films, resulting in the formation of wrinkles over time.

In one embodiment, the thickness of the biaxially oriented polyester film is preferably in the range of 10 *µ*m to 16 *µ*m. At this time, when the thickness is less than 10 *µ*m, wrinkles occur during roll winding, and air release is compromised, leading to the formation of wrinkles over time. However, the aforementioned upper value is not limited because the thicker the biaxially oriented polyester film, the less likely it is to form wrinkles over time.

The method of producing a biaxially oriented polyester film according to an embodiment of the present invention includes a first step of mixing inorganic particles and a polyester resin, extruding and biaxially stretching to produce a master roll, a second step of slitting the master roll to a predetermined width, and a third step of rewinding the slit polyester film with a predetermined winding tension, a predetermined winding surface pressure, and a predetermined winding speed to produce a rewound roll of biaxially oriented polyester film.

First, in the first step of producing a master roll by mixing inorganic particles and polyester resin, extruding and biaxially orienting, the polyester resin is mixed with inorganic particles, extruded, and biaxially oriented in the MD and TD directions to produce a biaxially oriented polyester film. At this time, the average particle size of the inorganic particles is preferably in the range of 3.0 to 5.0 *µ*m, and the content of inorganic particles is preferably in the range of 0.0 008 to 0.0015 wt % based on 100 wt % of the total biaxially oriented polyester film. Additionally, the polyester film produced in the first step is preferably wound into a master roll for convenience in subsequent processes.

Next, in the second step of slitting the master roll to a predetermined width, the polyester film wound in a master roll is slit to the required width, which is the width demanded by the user. At this time, the width of the polyester film achieved through slitting is not particularly limited and may be freely adjusted according to the purpose for which the polyester film will be used and the requirements of the businesses that need it.

Then, in the third step of rewinding the slit polyester film at a predetermined winding tension, a predetermined winding surface pressure, and a predetermined winding speed to produce a rewound roll of a biaxially oriented polyester film, the polyester film with the predetermined width through slitting is rewound at a winding tension of 6.5 kg/m to 8.5 kg/m, a winding surface pressure of 35 kg/m to 50 kg/m, and a winding speed of 300 m/min to 350 m/min to produce the rewound roll of biaxially oriented polyester film. This step prevents the occurrence of wrinkles over time in the biaxially oriented polyester film when rewound under the above-mentioned conditions.

Meanwhile, the second and third steps may be performed as separate processes, or for the sake of convenience in the process, the third step may be performed simultaneously during the slitting process in the second step.

In the method of producing a biaxially oriented polyester film described above, repeated content identical to the content of the biaxially oriented polyester film of FIG. 1 has been omitted from the description.

In one embodiment, when slitting the master roll on which the above-described biaxially oriented polyester film is wound and rewinding it for providing to the user, the final rewound roll preferably has a hardness of 90 to 95 points under the winding tension of 6.5 kg/m to 8.5 kg/m, the winding surface pressure of 35 kg/m to 50 kg/m, and the winding speed of 300 m/min to 350 m/min. In this case, if the hardness of the roll is less than 90 points, roll deformation and transverse wrinkles of the film occur, while if it exceeds 95 points, wrinkles are formed over time.

When rewinding as described above, if the winding tension is less than 6.5 kg/m and the winding surface pressure is less than 35 kg/m, transverse wrinkles and telescoping of a wound roll occur due to tension and surface pressure during master roll winding. This results in improper winding, making it impossible to produce the product. On the other hand, if the winding tension exceeds 8.5 kg/m and the winding surface pressure exceeds 50 kg/m, a significant amount of air enters between different film layers, accelerating the occurrence of wrinkles.

In addition, when the rewinding speed is less than 300 m/min, the hardness of the roll increases, leading to the formation of wrinkles over time. Conversely, when the rewinding speed exceeds 350 m/min, the rewinding speed becomes excessively fast, allowing a considerable amount of air to enter between different film layers, accelerating the occurrence of wrinkles.

Accordingly, in one embodiment of the present invention, the biaxially oriented polyester film is wound and produced into a master roll. Subsequently, the master roll is slit, followed by being rewound for delivery to the user under the following conditions: a winding tension of 6.5 kg/m to 8.5 kg/m, a winding surface pressure of 35 kg/m to 50 kg/m, and a winding speed of 300 m/min to 350 m/min. This allows air to escape smoothly between films, preventing the occurrence of wrinkles over time.

As described above, in one embodiment of the present invention, the biaxially oriented polyester film may be used as a separator for a secondary battery since it can suppress the generation of wrinkles due to the mentioned properties, preventing wrinkles from transferring onto the separator during separator lamination processing.

Therefore, those skilled in the art readily understand that the scope of the present invention extends to a biaxially oriented polyester film used as an interlayer of a secondary battery separator, a secondary battery separator including the same, and a secondary battery including such a secondary battery separator.

Hereinafter, the present invention will be described in more detail with reference to Examples. The following Examples are provided to illustrate further the present disclosure and are not intended to limit the scope of the present invention.

### [Examples]

### [Example 1] an average particle size of the inorganic particles

0.00087 wt % of inorganic particles (SiO₂) with an average particle size of 3.75 *µ*m are mixed with 99.99913 wt % of polyester resin (PET A9039, Toray Advanced Materials Korean Inc.). Next, after vacuum drying the mixed polyester resin, the resin is melted at a temperature of 275 °C to 285 °C using an extruder, passed through a feed block, and extruded through a T-die. Then, the resin is attached to a casting drum in a cooling roll by electrostatic pinning to cool and solidify the resin so as to obtain an unstretched sheet. This sheet is uniaxially (longitudinally) stretched by a difference in speed ratio between rolls heated to a temperature above the glass transition temperature of the sheet. At this time, a longitudinal stretching ratio is 4.5 times. Next, biaxial stretching is performed at a ratio of 4.1 times in the transverse direction, which is perpendicular to the longitudinal direction, after the uniaxial stretching. At this time, based on the tenter, the stretching temperatures are set to 100°C to 120°C in the early part of the stretching zone, 120°C to 140°C in the middle part of the stretching zone and 200°C to 240°C in the stretching heat-setting zone.

A polyester film master roll produced as described above is prepared, wherein the thickness of the biaxially oriented polyester film is 12 *µ*m.

Next, the prepared polyester film master roll is silt to a width of 1,120 mm and rewound at a winding tension of 7.6 kg/m, a winding surface pressure of 48 kg/m, and a winding speed of 340 m/min to produce a biaxially oriented polyester film roll.

### [Example 2]

A biaxially oriented polyester film roll was produced in the same manner as in Example 1, except that the content of inorganic particles was set to 0.0008 wt %.

### [Example 3]

A biaxially oriented polyester film roll was produced in the same manner as in Example 1, except that the content of inorganic particles was set to 0.0015 wt %.

### [Example 4]

A biaxially oriented polyester film roll was produced in the same manner as in Example 1, except that the size of the inorganic particles was 3 *µ*m.

### [Example 5]

A biaxially oriented polyester film roll was produced in the same manner as in Example 1, except that the size of the inorganic particles was 5 *µ*m.

### [Example 6]

A biaxially oriented polyester film roll was produced in the same manner as in Example 1, except that the winding tension was set to 6.5 kg/m.

### [Example 7]

A biaxially oriented polyester film roll was produced in the same manner as in Example 1, except that the winding tension was set to 8.5 kg/m.

### [Example 8]

A biaxially oriented polyester film roll was produced in the same manner as in Example 1, except that the winding surface pressure was set to 35 kg/m.

### [Example 9]

A biaxially oriented polyester film roll was produced in the same manner as in Example 1, except that the winding surface pressure was set to 50 kg/m.

### [Comparative Examples]

### [Comparative Example 1]

A biaxially oriented polyester film roll was produced in the same manner as in Example 1, except that the size of the inorganic particles was 2.9 *µ*m.

### [Comparative Example 2]

A biaxially oriented polyester film roll was produced in the same manner as in Comparative Example 1, except that the content of inorganic particles was set to 0.0016 wt %.

### [Comparative Example 3]

A biaxially oriented polyester film roll was produced in the same manner as in Example 1, except that the size of the inorganic particles was 5.1 *µ*m.

### [Comparative Example 4]

A biaxially oriented polyester film roll was produced in the same manner as in Example 1, except that the content of inorganic particles was set to 0.0007 wt %.

### [Comparative Example 5]

A biaxially oriented polyester film roll was produced in the same manner as in Example 1, except that the content of inorganic particles was set to 0.0016 wt %.

### [Comparative Example 6]

A biaxially oriented polyester film roll was produced in the same manner as in Example 1, except that the winding tension was set to 8.6 kg/m.

### [Comparative Example 7]

A film was produced in the same manner as in Example 1, except that the winding tension was set to 6.4 kg/m.

### [Comparative Example 8]

A biaxially oriented polyester film roll was produced in the same manner as in Example 1, except that the rewinding surface pressure was set to 51 kg/m.

### [Comparative Example 9]

A film was produced in the same manner as in Example 1, except that the rewinding surface pressure was set to 34 kg/m.

### [Comparative Example 10]

A biaxially oriented polyester film roll was produced in the same manner as in Example 1, except that the rewinding speed was set to 290 m/min.

For the biaxially oriented polyester film rolls produced in Examples 1 to 9 and Comparative Examples 1 to 10, physical properties were evaluated through the following experimental examples, and the results are shown in Table 1.

### [Experimental examples]

### (1) Evaluation of wrinkles over time

Films rolls, wound with the biaxially oriented polyester films produced according to Examples and Comparative Examples, were packaged, stored, and then unpacked after 2 days to visually inspect the surface condition of the wound rolls to determine whether wrinkles were formed. The length of the wound film was 8,200 meters, and the film was evaluated as follows:
Good: No wrinkles formed over time on the entire width of the film
Poor: Wrinkles formed over time across the entire width of the film

### (2) Hardness of wound roll

Using a precision-type hardness gauge (model: Type C) manufactured by ASKER according to JIS K 7312 standards, the hardness of the film rolls after winding was measured by placing the gauge on the surface of the wound film roll and pressing it to measure the hardness at the left and right ends of the roll, each once.

### (3) Measurement of SRa, SRz, SRmax (film surface roughness)

Using a three-dimensional surface roughness measurement instrument (model: SE3500K) manufactured by Kosaka Laboratory Ltd., the values of SRa, SRz, and SRmax for the surface of each film were measured.

### (4) Number of SPC projections

Using a three-dimensional surface roughness measurement instrument (model: SE3500K) manufactured by Kosaka Laboratory Ltd., the SPC (Surface Peak Count) of the surface of each film was measured, and the number of projections with a height of 0.15 *µ*m or more within a measurement area of 0.1 mm² was calculated.

### (5) Measurement of haze

One sheet of film was measured using a hazemeter (model name: COH-300A) from Nippon Denshoku Industries Co., Ltd.

**[Table 1]**

| Classification | Wrinkles over time | Roll hardness | SRa | SRz | SRmax | Number of SPC projections | Haze |
|---|---|---|---|---|---|---|---|
| Example 1 | Good | 92 | 53 nm | 825 nm | 1218 nm | 160 | 4.40% |
| Example 2 | Good | 91 | 51 nm | 812 nm | 1433 nm | 143 | 4.10% |
| Example 3 | Good | 90 | 67 nm | 1239 nm | 1580 nm | 250 | 5.50% |
| Example 4 | Good | 94 | 48 nm | 807 nm | 1175 nm | 128 | 4.20% |
| Example 5 | Good | 90 | 75 nm | 1222 nm | 1753 nm | 200 | 6.10% |
| Example 6 | Good | 91 | 53 nm | 825 nm | 1218 nm | 160 | 4.40% |
| Example 7 | Good | 94 | 53 nm | 825 nm | 1218 nm | 160 | 4.40% |
| Example 8 | Good | 91 | 53 nm | 825 nm | 1218 nm | 160 | 4.40% |
| Example 9 | Good | 93 | 53 nm | 825 nm | 1218 nm | 160 | 4.40% |
| Comparative Example 1 | Poor | 97 | 41 nm | 802 nm | 1027 nm | 90 | 3.90% |
| Comparative Example 2 | Poor | 96 | 45 nm | 825 nm | 1099 nm | 160 | 5.20% |
| Comparative Example 3 | Good | 88 | 81 nm | 1312 nm | 1826 nm | 263 | 5.90% |
| Comparative Example 4 | Poor | 96 | 39 nm | 799 nm | 1065 nm | 92 | 3.90% |
| Comparative Example 5 | Good | 88 | 62 nm | 1236 nm | 1335 nm | 123 | 5.30% |
| Comparative Example 6 | Poor | 96 | 53 nm | 825 nm | 1218 nm | 160 | 4.40% |
| Comparative Example 8 | Poor | 97 | 53 nm | 825 nm | 1218 nm | 160 | 4.40% |
| Comparative Example 10 | Poor | 96 | 53 nm | 825 nm | 1218 nm | 160 | 4.40% |

As shown in Table 1, in the case of Examples 1 to 9, a rewound roll was produced by adding 0.0008 wt % to 0.0015 wt % of inorganic particles with an average particle size of 3.0 *µ*m to 5.0 *µ*m to the polyester resin, extruding and biaxially orienting the polyester resin to form a master roll of polyester film, followed by slitting and rewinding with a winding tension of 6.5 kg/m to 8.5 kg/m, a winding surface pressure of 35 kg/m to 50, and a winding speed of 300 m/min to 350. It can be confirmed that a biaxially oriented polyester film with improved time-induced wrinkles can be provided.

In contrast, in the case of Comparative Example 1, it can be observed that the small size of the inorganic particles and the high roll hardness led to the formation of wrinkles over time. Additionally, SRmax was below the minimum range, the number of projections was less than 100, and the haze was less than 4%.

In addition, in Comparative Example 2, despite adding more small-sized inorganic particles, the hardness of the roll was high, causing wrinkles over time, and SRmax was below the minimum range.

Additionally, in Comparative Example 3, it can be seen that the size of the inorganic particles was so large that SRa, SRz, and SRmax all exceeded the maximum values. Also, it can be seen that due to the low hardness of the roll, the physical properties of the produced film became soft and the roll sagged toward the bottom, resulting in winding defects.

In addition, in Comparative Example 4, inorganic particles of the same size as in Example 1 were used, but in an amount of 0.0007 wt %, which was below the reference level. Accordingly, it can be seen that SRa, SRz, and SRmax were all below the minimum values, the number of projections was less than 100, the haze was less than 4%, and wrinkles were formed over time due to the high roll hardness.

Moreover, in Comparative Example 5, a roll hardness was excessively low, causing the film to become soft and the roll to curl downwards, resulting in winding defects. Additionally, during production, pressure excessively increases in the filter, leading to decreased productivity.

In addition, in Comparative Example 6, the winding tension after slitting was set to 8.6 kg/m, which is significantly high, leading to increased roll hardness and formation of wrinkles over time accordingly.

Additionally, Comparative Example 8 maintained the same winding tension as in Example 1 but increased the rewinding surface pressure, resulting in higher roll hardness and the formation of wrinkles over time.

In addition, Comparative Example 10 lowered the rewinding speed, which increased roll hardness and led to the formation of wrinkles over time.

Notably, apart from those listed in Table 1, it is confirmed that Comparative Examples 7 and 9 with low winding tension or winding surface pressure resulted in winding defects such as defective winding cross-section, compressions, and folds when the film was produced and wound.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A biaxially oriented polyester film comprising inorganic particles and a polyester resin,
wherein the hardness of a roll obtained by slitting a master roll on which the biaxially oriented polyester film is wound and then by being rewound thereon at a winding tension of 6.5 kg/m to 8.5 kg/m, a winding surface pressure of 35 kg/m to 50 kg/m and a winding rate of 300 m/min to 350 m/min, is 90 to 95 points.

2. The biaxially oriented polyester film of claim 1, wherein an average particle size of the inorganic particles is in a range of 3.0 *µ*m to 5.0 *µ*m.

3. The biaxially oriented polyester film of claim 1, wherein the inorganic particles are comprised in an amount of 0.0008 to 0.0015 wt %.

4. The biaxially oriented polyester film of claim 1, wherein the biaxially oriented polyester film has a center line average roughness (SRa) of 40 nm to 80 nm and a 10-point mean roughness (SRz) of 800 nm to 1300 nm.

5. The biaxially oriented polyester film of claim 4, wherein the biaxially oriented polyester film has a maximum roughness (SRmax) of 1100 nm to 1800 nm.

6. The biaxially oriented polyester film of claim 1, wherein the biaxially oriented polyester film has a haze of 4% or more.

7. The biaxially oriented polyester film of claim 1, wherein the biaxially oriented polyester film has a surface peak count (SPC) of 100 or more projections with a height of 0.15 *µ*m or more within an area of 0.1 mm².

8. The biaxially oriented polyester film of claim 1, wherein the inorganic particles are silica particles.

9. The biaxially oriented polyester film of claim 1, wherein a thickness of the biaxially oriented polyester film is in a range of 10 *µ*m to 16 *µ*m.

10. The biaxially oriented polyester film of any one of claims 1 to 9 being used as an interlayer of a secondary battery separator.

11. A secondary battery separator comprising the biaxially oriented polyester film of any one of claims 1 to 9.

12. A secondary battery comprising the secondary battery separator of claim 11.
